(19) **Europäisches Patentamt / European Patent Office / Office européen des brevets**

(11) **EP 2 682 902 B1**

(12) **FASCICULE DE BREVET EUROPEEN**

(45) Date de publication et mention
de la délivrance du brevet:
**23.09.2020 Bulletin 2020/39**

(51) Int Cl.:
***G06K 9/20*** *(2006.01)*

(21) Numéro de dépôt: **13174643.0**

(22) Date de dépôt: **02.07.2013**

(54) **Surface imprimée et dispositif et procédé de traitement d'images d'une telle surface imprimée.**

Gedruckte Oberfläche und Vorrichtung und Verfahren zur Verarbeitung von Bildern einer solchen bedruckten Oberfläche.

Printed surface and device and method for processing images of such printed surface.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.07.2012 FR 1256475**

(43) Date de publication de la demande:
**08.01.2014 Bulletin 2014/02**

(73) Titulaire: **Holdham**
**14200 Herouville-Saint-Clair (FR)**

(72) Inventeur: **Deschenes, Laurent**
**14610 Cairon (FR)**

(74) Mandataire: **Thinat, Michel**
**Cabinet Weinstein**
**176 avenue Charles de Gaulle**
**92200 Neuilly sur Seine (FR)**

(56) Documents cités:
**EP-A1- 1 833 022      EP-A2- 2 333 696**
**WO-A1-01/80150      US-A1- 2010 239 118**
**US-A1- 2012 069 383**

- **Anonymous: "Corriger la perspective - Médiaforma", , 2 August 2019 (2019-08-02), XP55677462, Retrieved from the Internet: URL:https://www.mediaforma.com/corriger-la -perspective/ [retrieved on 2020-03-18]**

**Description**

L'invention concerne un dispositif de traitement automatique d'une image de surfaces imprimées comportant au moins un marqueur de position d'une zone principale. De plus, l'invention concerne une surface imprimée dont l'acquisition d'une image est destinée à être traitée par le dispositif de traitement précédent. Enfin, l'invention concerne aussi un procédé de traitement d'une image d'une telle surface imprimée dans un dispositif de traitement d'une telle image.

Le document US 2012/0069383 décrit un dispositif de traitement d'une image d'une surface imprimée comportant une zone principale délimitée par trois marqueurs de position identiques et par un marqueur d'orientation. Les quatre marqueurs précédents permettent de définir la zone principale à extraire de l'image et le marqueur d'orientation permet de différencier le haut du bas de la zone principale ainsi que de déterminer la position relative d'une zone de saisie de caractères constituée de traits sur des digits 7-segments. Dans ce document, le traitement de l'image repose sur un modèle unique de la zone principale à extraire reproduit de manière homothétique sous différents formats de page : petit, moyen ou large. Une telle reproduction homothétique garantit un rapport largeur sur hauteur constant de la zone principale, ce qui permet de corriger l'effet de perspective par la méthode dite "Keystone", qui permet de transformer, en première approximation, une forme trapézoïdale isocèle de la zone principale photographiée de manière inclinée en une forme rectangulaire afin d'obtenir une image corrigée de la zone principale comme si la surface imprimée avait été lue par un scanner de documents à plat.

Toutefois, l'inconvénient du dispositif du document US 20120069383 est le format et le type unique que doivent respecter la zone principale qui doit être extraite de l'image acquise ainsi que la position unique des zones secondaires dans la zone principale et faisant l'objet d'un post traitement.

Le document US 2010239118 concerne un procédé et un système pour effectuer une correction d'image de document à l'aide d'un lecteur de document. Le procédé consiste à générer une image de document représentative d'un document ayant une déformation; décoder un motif optique intégré dans le document à partir de l'image du document pour déterminer une signature optique pour le document; recevoir des données de classification de documents associées à la signature optique; et appliquer une technique de correction d'image à l'image de document sur la base des données de classification de document pour générer une image de document corrigée.

Un but de l'invention est de fournir un dispositif de traitement d'une image de surfaces imprimées comportant une zone principale à extraire qui puisse traiter précisément et spécifiquement des zones principales de formats et modèles différents ou plusieurs zones principales de formats ou types différents capturées dans une même image.

A cette fin, il est prévu, selon l'invention, un dispositif et un procédé concernent traitement d'une image de surfaces imprimées et une surface imprimée comme revendiqués dans les revendications annexées.

Les avantages et caractéristiques de l'invention apparaîtront lors de la description ci-après d'un mode de réalisation de l'invention ainsi que deux variantes. Aux dessins annexés :

- la figure 1 illustre une image acquise d'une surface imprimée selon l'invention destinée à être traitée dans un dispositif de traitement selon l'invention et suivant un procédé de traitement selon l'invention ;
- la figure 2 est un schéma illustrant une méthode de transformation affine d'un quadrilatère en rectangle dans la plan ;
- la figure 3 est un organigramme illustrant le procédé de traitement d'une image selon l'invention ;
- la figure 4 est une vue de dessus d'un premier mode de réalisation d'une surface imprimée selon l'invention ;
- la figure 5 est un schéma illustrant la zone principale extraite depuis la surface imprimée de la figure 4 associée à son microcode et à une zone secondaire sous forme d'une marge ;
- les figures 6 et 7 illustrent des variantes de réalisation des marqueurs de position associés à la zone principale d'une surface imprimée selon l'invention ;
- la figure 8 est une vue de dessus d'une variante de réalisation d'une surface imprimée selon l'invention.

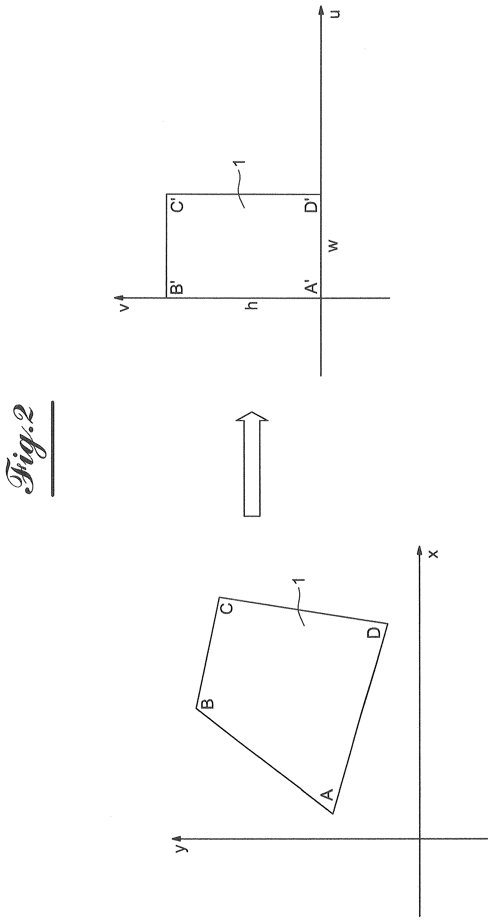

D'un point de vue mathématique, en référence à la figure 2, la zone principale 1 à extraire de l'image acquise est contenue dans un quadrilatère (A,B,C,D) défini par les coordonnées (x,y) de chacun des quatre coins (A,B,C,D) dans le plan de l'image. Afin de corriger l'effet de perspective lors de l'acquisition de l'image, il faut projeter l'image de la zone principale 1 contenue dans le quadrilatère (A,B,C,D) dans un rectangle (A',B',C',D') dont les coordonnées (u,v) des quatre coins (A',B',C',D') dépendent de la dimension réelle de la zone principale 1 à extraire. En utilisant des méthodes de calcul de type transformation affine dans le plan issue de la « transformation homogène affine 3D» appliquée à la modélisation de la perspective par caméra, il est possible de déterminer la transformation de chacun des points contenus dans le quadrilatère (A,B,C,D) de l'image acquise afin de corriger et de restituer le contenu de la zone principale à extraire 1 dans le rectangle (A',B',C',D'), et ce sans déformation. Cette transformation affine répond à la paire d'équations suivantes pour chacun des points :

$$u = \frac{a.x + b.y + c}{g.x + h.y + i} \qquad\qquad v = \frac{d.x + e.y + f}{g.x + h.y + i}$$

où (x,y) sont les coordonnées d'un point du quadrilatère (A,B,C,D) dans le plan de l'image acquise ;

(u,v) sont les coordonnées du point équivalent après transformation et correction dans le rectangle (A',B',C',D') dans le plan ; et

a,b,c,d,e,f,g,h,i sont les paramètres de la transformation calculés à partir des coordonnées des coins du quadrilatère (A,B,C,D) et du rectangle (A',B',C',D').

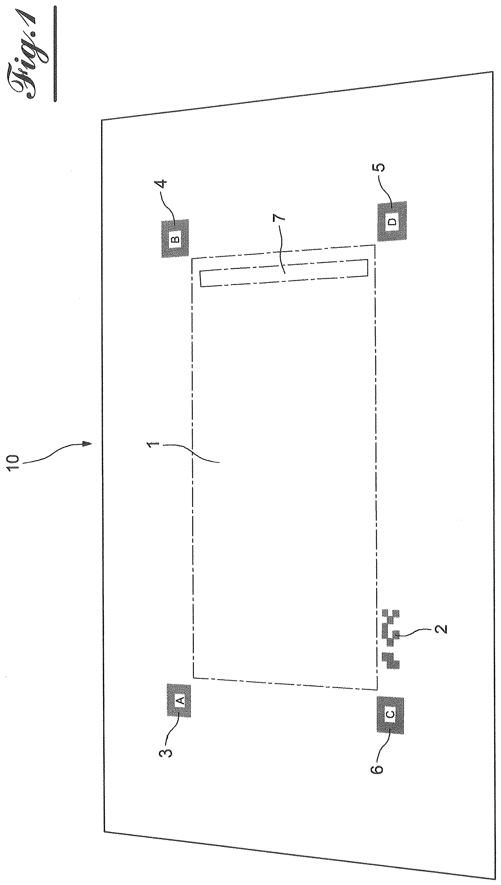

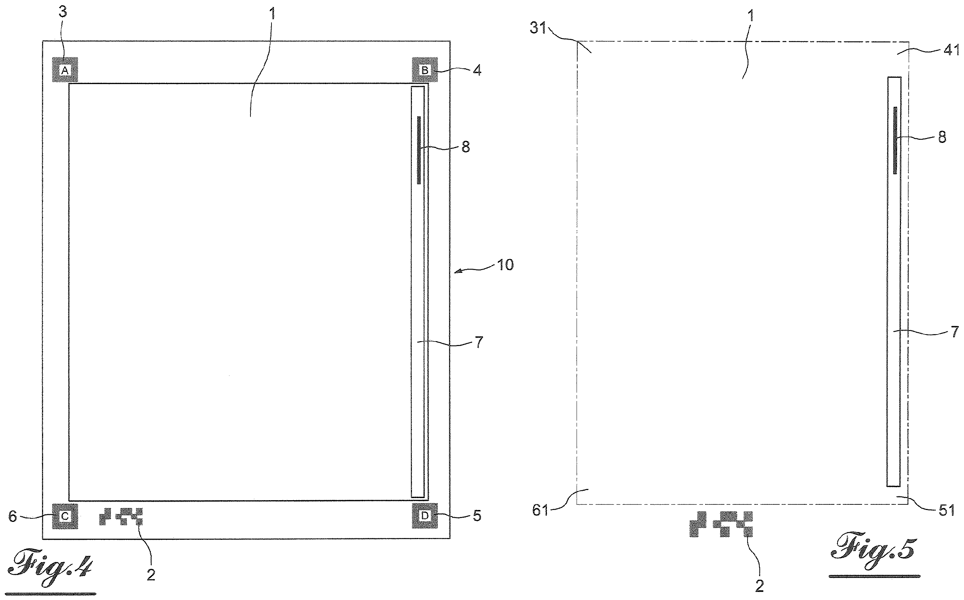

En référence aux figures 1 et 4, nous allons décrire une surface imprimée 10 selon l'invention. La surface imprimée 10 est ici une feuille de bloc-notes, par exemple. La surface imprimée 10 comporte une zone principale 1 qui est destinée à être extraite après avoir acquis une image de la surface imprimée 10 selon un procédé de traitement de l'image selon l'invention dans un dispositif de traitement d'une image selon l'invention, le procédé et le dispositif allant être décrits ultérieurement. Associé à la zone principale 1 à extraire, la surface imprimée 10 selon l'invention comporte une série de marqueurs 3,4,5,6 associés à cette zone principale 1 à extraire. Ici, les marqueurs de position sont au nombre de quatre et sont situés au voisinage des quatre coins formant le quadrilatère de la zone principale 1 à extraire. D'autre part, la zone imprimée 10 selon l'invention comporte une zone contenant un microcode 2 associé à la zone principale 1 à extraire. La zone contenant le microcode 2 est positionnée de manière prédéterminée par rapport à la série de marqueurs de positions 3,4,5,6 associés à la zone principale 1 à extraire. D'autre part, la surface imprimée 10 selon l'invention comporte en outre une zone secondaire 7 de traitement qui est optionnelle et qui est ici imprimée sous la forme d'une marge, ici verticale, dont la position est prédéfinie par rapport à la zone principale 1 à extraire par le microcode 2. Cette zone secondaire 7 permet à un utilisateur de la surface imprimée 10 selon l'invention d'indiquer par un trait 8 une partie de la zone principale 1 à extraire à laquelle le dispositif de traitement selon l'invention et/ou le procédé de traitement selon l'invention appliquent un post-traitement spécifique une fois la zone principale 1 extraite et la zone secondaire 7 extraite de l'image projeté sans déformation de la zone principale 1 puis analysée pour déterminer la position des zones de notes à extraire à partir de la zone secondaire 7. L'utilisateur de la surface imprimée 10 selon l'invention peut ainsi indiquer des notes importantes à regrouper.

La série de marqueurs de position 3,4,5,6 va permettre de déterminer les quatre coins de la zone principale 4 à extraire et comprend, ici, quatre marqueurs de position différents et distincts les uns des autres. Ainsi il est possible d'opérer un filtrage des différents marqueurs de position apparaissant dans l'image acquise de la surface imprimée 10 selon l'invention, en particulier si l'image comprend plusieurs zones principales 1 à extraire côte-à-côte. Par exemple, ici, le marqueur 3 comprend la lettre "A" entourée d'un contour carré et le marqueur 6 comprend la lettre "C" elle-même entourée d'un même contour carré. Ces deux marqueurs de positions 2 et 6 sont situés à gauche des marqueurs 4, comprenant une lettre "B" entourée d'un contour carré, et 5, comprenant une lettre "D" entourée d'un contour carré. Une telle disposition prédéfinie des quatre marqueurs de position 3,4,5,6 permet de déterminer la zone principale 1 à extraire à laquelle ils sont associés et de filtrer la présence d'éventuels autres marqueurs de positions associés à d'autres zones principales.

En référence à la figure 5, les coordonnées de la zone principale 1 à extraire sont définies par les quatre coins 31,41,51,61 d'un rectangle délimitant ladite zone principale 1 à laquelle est associé un microcode 2 dont les coordonnées de la zone le contenant sont prédéfinies par rapport à ladite zone principale 1. Les coordonnées des quatre coins de la zone principale 1 sont déduites de la position et de la forme du ou des marqueurs de position. De ce fait, selon l'invention, les coordonnées des quatre coins de la zone principale 1 à extraire sont déterminées à l'aide des coordonnées d'au moins un marqueur de position identifiable par rapport aux autres contours pouvant apparaitre dans l'image, en particulier dans la zone principale 1 à extraire.

De manière générale, selon l'invention, le marqueur de position est défini par un contour de forme rectangulaire imprimé sur la surface imprimée 10 selon l'invention dans une couleur différente d'une couleur d'un fond de la surface imprimée 10 selon l'invention. A l'intérieur de ce contour, est imprimée une image ou un symbole permettant d'identifier de manière unique le marqueur de position comme tel et distinct des éventuels autres marqueurs de position, si plusieurs de ces marqueurs de position sont utilisés pour calculer les coordonnées de quatre coins 31,41,51,61 de la zone principale 1 à extraire ainsi que des coordonnées de la zone contenant le microcode 2 associé à la zone principale 1 à extraire.

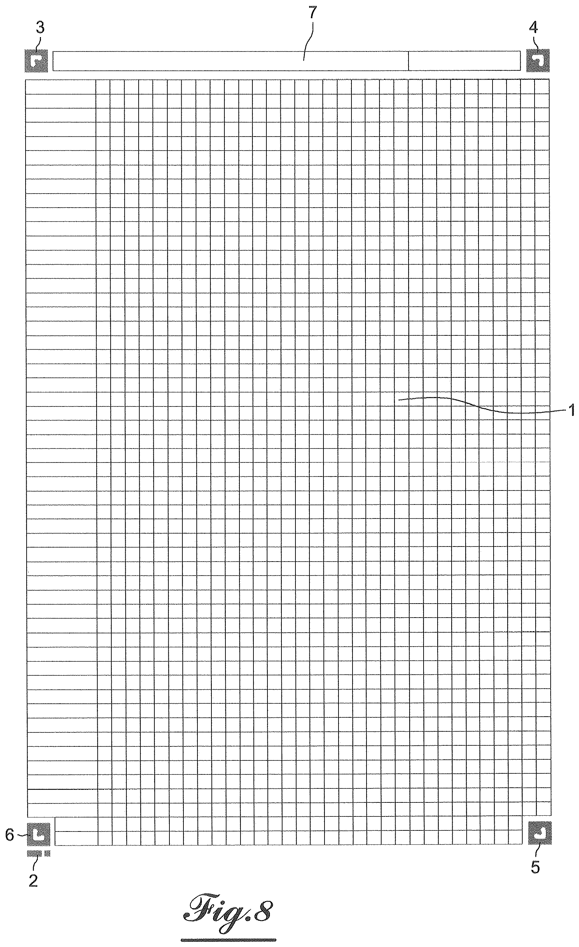

Par exemple, comme illustré à la figure 4, les marqueurs de position 3,4,5 et 6 comportent un contour de forme carrée à l'intérieur duquel est positionnée une lettre de l'alphabet en lettre majuscule. Ici, quatre marqueurs de position sont utilisés et, de ce fait, quatre lettre différentes de l'alphabet sont utilisées pour les rendre distincts les uns des autres. En variante de réalisation illustrée à la figure 8, les marqueurs de position 3,4,5 et 6 comprennent un même contour carré entourant un symbole représentant un onglet dont l'orientation est propre à un marqueur de position donné.

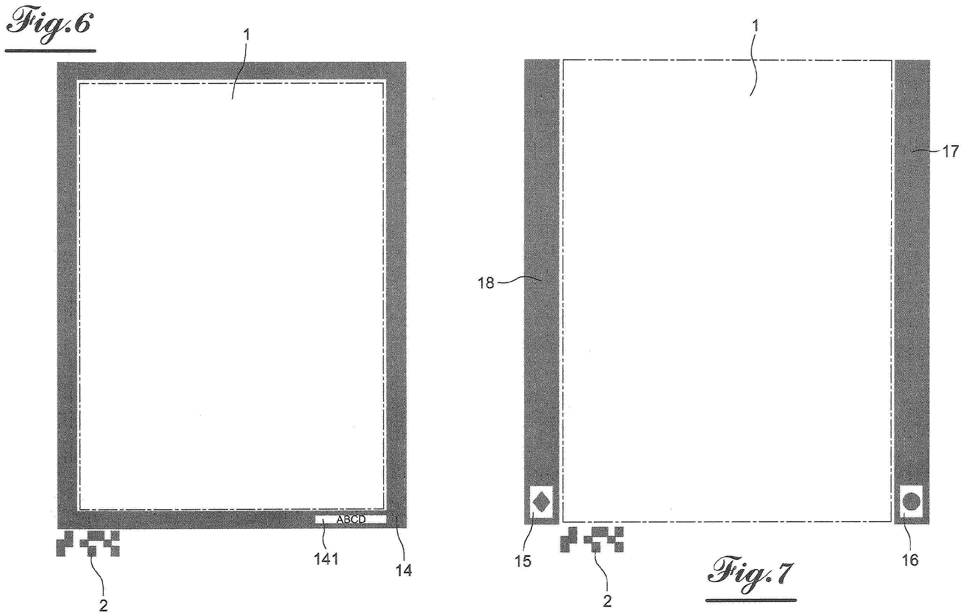

Un deuxième mode de réalisation d'un marqueur de position est illustré en figure 6. Le marqueur de position 14 se présente ici sous la forme d'un contour rectangulaire entourant la zone principale 1 à extraire. Dans l'épaisseur du contour du marqueur de position 14 est placée une image ou un symbole 141 dans une zone rectangulaire permettant son identification comme marqueur de position distinct d'autres contours rectangulaires pouvant apparaitre éventuellement dans l'image, comme, par exemple, des réglures. A partir de ce marqueur de positionnement 14, un microcode 2 associé à la zone principale 1 est identifiable dans une zone définie. La position prédéfinie de la zone contenant le microcode 2 est établie par rapport aux coordonnées des quatre coins 31,41,51,61 de la zone principale 1 et, donc, par rapport aux coordonnées des quatre coins extérieurs du contour formant le marqueur de position 14. La zone contenant le microcode 2 peut se situer à l'intérieur ou à l'extérieur dudit contour.

En référence à la figure 7, est illustré un troisième mode de réalisation de marqueurs de position. Ici, deux marqueurs de position distincts 17,18 sont utilisés et se présentent tous deux sous la forme de deux barres verticales situées de part et d'autre de la zone principale 1 à extraire. En variante de réalisation, les deux barres formant les marqueurs de positionnement 17, 18 peuvent être horizontales et situées respectivement au-dessus et au-dessous de la zone principale 1 à extraire. Dans l'épaisseur de chacune des barres, est placée une image ou un symbole 16,15 dans une zone rectangulaire prévue dans l'épaisseur de chacune des barres et permettant l'identification du marqueur comme un marqueur de position. Bien entendu, chaque marqueur de position 17,18 de la zone principale 1 à extraire se caractérise par un symbole différent et se distingue d'un simple contour rectangulaire pouvant apparaitre éventuellement dans l'image de la zone principale 1. Ici, un losange 15 est utilisé pour le marqueur de position 18 alors qu'un rond 16 est utilisé pour le marqueur de position 17. De nouveau, un microcode 2 est associé à la zone principale 1 déterminée par les deux marqueurs de position 17,18 et est contenu dans une zone dont la position est établie par rapport aux coordonnées des quatre coins de la zone principale et donc par rapport aux coordonnées des coins extérieurs du contour de chaque marqueur de position 17,18.

Le microcode 2 se présente sous la forme d'un code-barres bidimensionnel, comme cela est illustré aux figures 1 et 4 à 7, ou encore unidimensionnel comme illustré à la figure 8. Ce code barres bidimensionnel peut être un code de couleur bidimensionnel. Toutes autres dispositions de code-barres (Data matrix, QRCode, ...), peuvent être utilisées indifféremment. L'identification puis le décodage du microcode 2 permet de fournir une valeur ou un ensemble de valeurs permettant de caractériser la zone principale 1 à extraire par le procédé de traitement d'une image selon l'invention dans un dispositif de traitement d'une image selon l'invention. Les informations associées à la ou les valeurs contenues dans le microcode sont le modèle de la zone principale 1, les dimensions de la zone principale 1 ainsi qu'éventuellement les position et dimensions d'une ou plusieurs zones secondaires 7 et la séquence de traitement spécifique à appliquer à la zone principale 1 et le post-traitement spécifique à appliquer après analyse de chaque zone secondaire 7. D'autres informations concernant la zone principale 1 à extraire peuvent être prévues.

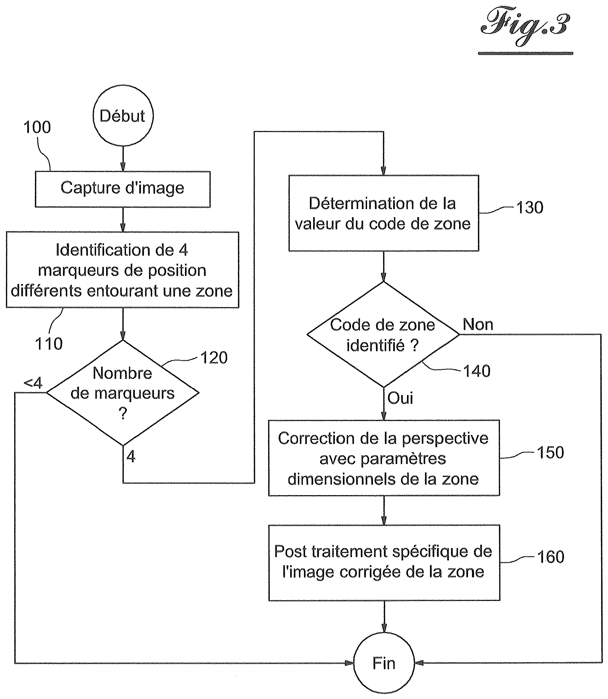

Maintenant, en référence à la figure 3, nous allons décrire le procédé de traitement d'une image selon l'invention qui permet d'extraire la zone principale 1 de la surface imprimée 10 selon l'invention. Dans un premier temps, une image de la surface imprimée 10 selon l'invention est acquise, lors d'une étape 100. Une telle image acquise est illustrée par exemple à la figure 1. A partir de cette image, le procédé de traitement d'une image selon l'invention identifie un ou une série de marqueurs de position associé à la zone principale 1 à extraire, dans une étape 110. Dans le cadre de l'image illustrée à la figure 1, le procédé de traitement d'une image selon l'invention identifie les quatre marqueurs de position 3,4,5,6 entourant la zone principale 1 à extraire. Dans le cadre du mode de réalisation de la figure 6, le procédé de traitement d'une image selon l'invention identifie le contour du marqueur 14, alors que dans le mode de réalisation illustré à la figure 7, le procédé de traitement d'une image selon l'invention identifie les deux marqueurs en forme de bande 17,18.

Dans une étape 120, le procédé de traitement d'une image selon l'invention vérifie que le nombre de marqueurs adéquat prévu pour la zone 1 à extraire a bien été identifié. Si ce n'est pas le cas, le procédé de traitement d'une image selon l'invention met fin à son fonctionnement.

Si le nombre de marqueurs identifié est celui prévu, dans une étape 130, le procédé de traitement d'une image selon l'invention détermine la ou les valeurs contenues dans le microcode 2 associé à la zone principale 1 à extraire. Pour cela, le procédé de traitement d'une image selon l'invention identifie la zone contenant le microcode 2 dans l'image acquise à partir des informations fournies par les marqueurs de position préalablement identifiés associés à la zone principale 1 à extraire. Une fois identifié, le procédé de traitement d'une image selon l'invention procède à une lecture et un décodage du microcode 2 afin d'en extraire la ou les valeurs qui permettent au procédé de traitement d'une image selon l'invention de déterminer un certain nombre d'informations associées à la zone principale 1 telles que son type ou les caractéristiques des zones secondaires 7, ses dimensions, la séquence de traitement spécifique à appliquer à ladite zone principale 1 et aux zones secondaires 7. Dans une étape 140, le procédé de traitement d'une image selon l'invention vérifie si le microcode 2 associé à la zone principale 1 a bien été identifié. Si ce n'est pas le cas, le procédé de traitement d'une image selon l'invention met fin à son fonctionnement.

Dans le cas contraire, le microcode 2 ayant été parfaitement identifié et décodé, le procédé de traitement d'une image selon l'invention effectue, lors d'une étape 150, une extraction de la zone principale 1 de l'image précédemment acquise en fonction d'une part des marqueurs de position préalablement identifiés et associés à ladite zone principale 1 à extraire et du microcode 2 préalablement identifié et décodé associé à ladite zone principale 1 à extraire. Durant cette étape d'extraction, le procédé de traitement d'une image selon l'invention détermine d'abord les paramètres a,b,c,d,e,f,g,h,i de la transformation affine à partir :

- des quatre coins du quadrilatère (A,B,C,D) représentant la zone principale 1 à extraire dans l'image acquise, les quatre coins ayant été eux même déterminés à partir de l'identification préalable des marqueurs de positions associés à la zone principale 1 à extraire ; et,
- des quatre coins du rectangle (A',B',C',D') calculés à partir des informations déterminées à partir du microcode associé à la zone principale 1 à extraire.

Puis, le procédé de traitement d'une image selon l'invention réalise une étape de correction de la perspective de la zone principale 1 à extraire dans l'image acquise en fonction des paramètres dimensionnels de la zone principale 1 à extraire obtenue suite au décodage du microcode 2 associé à ladite zone principale 1 à extraire, et à partir des paramètres a,b,c,d,e,f,g,h,i précédemment déterminés.

Ensuite, dans une étape 160, le procédé de traitement d'une image selon l'invention procède à l'application d'éventuels post-traitements spécifiques après analyse des zones secondaires 7 extraites de l'image projetée sans déformation de la zone principale 1. Ces post-traitements sont déclenchés si des informations associées au microcode 2 préalablement décodé le prévoient. Une fois l'étape 160 réalisée, le procédé de traitement d'une image selon l'invention procède à une sauvegarde des résultats de son fonctionnement.

Le procédé de traitement d'une image selon l'invention préalablement décrit est mis en œuvre dans un dispositif de traitement d'une image de surface imprimée selon l'invention qui comporte, à cet effet, au moins des moyens d'acquisition d'une image de la surface imprimée. D'autre part, le dispositif de traitement selon l'invention comporte des moyens d'identification d'au moins un marqueur de position dans une image acquise par les moyens d'acquisition ainsi que de moyens d'identification et de décodage d'un microcode 2 en fonction d'au moins un marqueur de position identifié. De plus, le dispositif de traitement d'une image selon l'invention comporte des moyens d'extraction d'une zone principale 1 située dans le plan d'une image acquise en fonction d'au moins un marqueur de position identifié et d'un microcode identifié et décodé. Les moyens d'extraction de la zone principale et des zones secondaires sont agencés de sorte à pouvoir appliquer une séquence de traitement spécifique à la zone principale repérée et aux zones secondaires prédéterminées en fonction des informations décodées du microcode identifié et associé à la zone principale à traiter. En particulier, cette séquence de traitement spécifique est une transformation de l'image de la zone principale dans le plan sans déformation tel qu'illustré à la figure 2 et préalablement discuté dans la description. Les moyens d'extraction comportent une unité de calcul.

Enfin, le dispositif de traitement d'une image selon l'invention comporte des moyens de stockage qui ont une double fonction :

- d'une part, de stocker les informations concernant une zone principale associée à une valeur ou des valeurs de microcode 2 ;
- d'autre part, de sauvegarder les résultats fournis par les moyens d'extraction à partir de l'image acquise après identification de la zone principale et des zones secondaires à extraire.

## Revendications

1. Dispositif de traitement automatique d'une image de surfaces imprimées comportant au moins un marqueur de position (3,4,5,6;14;17,18) d'une zone principale à extraire (1) d'une surface imprimée (10) de l'image, le dispositif comprenant :

   - des moyens d'acquisition de l'image de surfaces imprimées ;
   - des moyens d'identification du au moins un marqueur de position dans l'image de surfaces imprimées ; et
   - des moyens d'extraction de la zone principale située dans le plan de l'image en fonction du au moins un marqueur de position ainsi identifié,

   caractérisé en ce que le dispositif comporte en outre des moyens d'identification et de décodage d'un microcode (2), associé à la zone à extraire, dans l'image de surfaces imprimées, le microcode étant placé de manière prédéfinie par rapport à la zone principale à extraire, les moyens d'identification et de décodage étant configurés pour déterminer, à partir du microcode associé à la zone principale à extraire, une ou plusieurs zones secondaires (7) relatives à la zone principale à extraire, dont la position est prédéfinie par rapport à la zone principale par le microcode, le dispositif de traitement étant configuré pour déterminer une partie de la zone principale indiquée par un trait dans la zone secondaire et pour appliquer un post-traitement à ladite partie de la zone principale en fonction du microcode.

2. Dispositif de traitement selon la revendication 1, caractérisé en ce que les moyens d'identification et de décodage du microcode déterminent, à partir du microcode associé à la zone principale à extraire, des dimensions de la zone principale à extraire.

3. Dispositif de traitement selon la revendication 1 ou la revendication 2, caractérisé en ce que les moyens d'identification et de décodage du microcode déterminent, à partir du microcode associé à la zone principale à extraire, un type de la zone principale à extraire.

4. Dispositif de traitement selon l'une des revendications 1 à 3, **caractérisé en ce que** les moyens d'identification et de décodage du microcode déterminent, à partir du microcode associé à la zone principale à extraire, une séquence de traitement à appliquer spécifique de la zone principale à extraire.

5. Dispositif de traitement selon la revendication 1, **caractérisé en ce que** les moyens d'identification et de décodage du microcode déterminent, à partir du microcode associé à la zone principale à extraire, des post traitements à appliquer sur les zones secondaires.

6. Dispositif de traitement selon la revendication 4, **caractérisé en ce que** la séquence de traitement est une transformation de l'image de la zone principale dans le plan sans déformation.

7. Dispositif de traitement selon l'une des revendications 1 à 6, **caractérisé en ce que** le dispositif effectue un filtrage des différents marqueurs de position apparaissant dans l'image si l'image comprend plusieurs zones principales en distinguant les marqueurs de position associés.

8. Surface imprimée (10) comportant une zone principale (1) et au moins un marqueur de position (3,4,5,6;14;17,18) associé à la zone principale, **caractérisée en ce que** la surface imprimée comporte en outre un microcode (2) associé à la zone principale et positionné de manière prédéfinie par rapport à la zone principale, le microcode fournissant la position d'une ou plusieurs zones secondaires (7) relatives à la zone principale à extraire, et un post-traitement à appliquer à une partie de la zone principale indiquée par un trait dans la zone secondaire en fonction du microcode.

9. Surface imprimée selon la revendication 8, **caractérisée en ce que** le microcode comporte des informations sur la zone principale associée correspondant à au moins l'un parmi les dimensions, le type et la séquence de traitement à appliquer à la zone principale.

10. Surface imprimée selon la revendication 8 ou 9, **caractérisée en ce que** le marqueur de position est délimité par un contour entourant un symbole distinctif.

11. Surface imprimée selon l'une des revendications 8 à 10, **caractérisée en ce que** le marqueur de position est un cadre (14) entourant la zone principale associée.

12. Surface imprimée selon l'une des revendications 8 à 10, **caractérisée en ce qu'**elle comporte deux marqueurs de positions distincts (17,18) s'étendant le long de deux côtés opposés de la zone principale.

13. Surface imprimée selon l'une des revendications 8 à 10, **caractérisée en ce qu'**elle comporte un ensemble de marqueurs de position distincts (3,4,5,6), chaque marqueur de position de l'ensemble de marqueurs de positions étant placé à chaque coin (31,41,51,61) de la zone principale.

14. Surface imprimée selon l'une des revendications 8 à 13, **caractérisée en ce qu'**elle comporte plusieurs zones principales, chacune des zones principales étant associée à au moins un marqueur de position et un microcode.

15. Procédé de traitement d'une image d'une surface imprimée (10) selon l'une des revendications 8 à 14 dans un dispositif de traitement selon l'une des revendications 1 à 7, le procédé de traitement comportant des étapes de :

    - acquisition (100) d'une image de la surface imprimée par les moyens d'acquisition ;
    - identification (110,120) du au moins un marqueur de position d'une zone principale à extraire par les moyens d'identification dans l'image précédemment acquise ;
    - identification et décodage (130,140) du microcode associé à la zone à extraire correspondant au marqueur de position précédemment identifié ;
    - extraction (150,160) de la zone principale de l'image acquise par les moyens d'extraction en fonction du au moins un marqueur de position identifié et du microcode identifié et décodé, l'identification et décodage comprenant une détermination, à partir du microcode associé à la zone principale à extraire, d'une ou plusieurs zones secondaires (7) relatives à la zone principale à extraire, dont la position est prédéfinie par rapport à la zone principale par le microcode, le traitement comprenant une application d'un post-traitement à une partie de la zone principale indiquée par un trait dans la zone secondaire en fonction du microcode.

16. Procédé de traitement selon la revendication 15, **caractérisé en ce que** l'étape d'extraction de la zone principale comporte une étape de correction (150) d'une perspective de la zone principale dans l'image acquise en fonction de paramètres dimensionnels de la zone principale donnés par le microcode.

17. Procédé de traitement selon la revendication 16, **caractérisé en ce que** l'étape d'extraction de la zone principale comporte une étape de post-traitement (160) de l'image corrigée de la zone principale après analyse des zones secondaires prédéfinies par des paramètres de position et de dimensions donnés par le microcode.

**Patentansprüche**

1. Vorrichtung zur automatischen Verarbeitung einer Abbildung bedruckter Oberflächen, umfassend mindestens ein Positionszeichen (3, 4, 5, 6; 14; 17, 18) eines zu extrahierenden Hauptbereichs (1) einer bedruckten Oberfläche (10) der Abbildung, wobei die Vorrichtung umfasst:

   - Mittel zur Erfassung der Abbildung der bedruckten Oberflächen;
   - Mittel zum Identifizieren des mindestens einen Positionszeichens in der Abbildung der bedruckten Oberflächen und
   - Mittel zum Extrahieren des in der Bildebene liegenden Hauptbereichs als Funktion des derart identifizierten mindestens einen Positionszeichens,

   **dadurch gekennzeichnet, dass** die Vorrichtung ferner Mittel zum Identifizieren und Decodieren eines dem zu extrahierenden Bereich zugeordneten Mikrocodes (2) in der Abbildung der bedruckten Oberflächen umfasst, wobei der Mikrocode auf vorgegebene Art in Bezug auf den zu extrahierenden Hauptbereich positioniert ist, wobei die Identifizierungs- und Decodierungsmittel konfiguriert sind zum Bestimmen mindestens eines Nebenbereichs (7) in Bezug auf den zu extrahierenden Hauptbereich, dessen Position in Bezug auf den Hauptbereich vom Mikrocode vorgegeben ist, anhand des dem zu extrahierenden Hauptbereich zugeordneten Mikrocodes, wobei die Vorrichtung konfiguriert ist zum Bestimmen eines durch ein Merkmal im Nebenbereich angezeigten Teils des Hauptbereichs und zum Anwenden einer Nachbearbeitung auf den Teil des Hauptbereichs gemäß dem Mikrocode.

2. Vorrichtung nach Anspruch 1, **dadurch gekennzeichnet, dass** die Identifizierungs- und Decodierungsmittel für den Mikrocode anhand des dem zu extrahierenden Hauptbereich zugeordneten Mikrocodes die Dimensionen des zu extrahierenden Hauptbereichs bestimmen.

3. Vorrichtung nach Anspruch 1 oder 2, **dadurch gekennzeichnet, dass** die Identifizierungs- und Decodierungsmittel für den Mikrocode anhand des dem zu extrahierenden Hauptbereich zugeordneten Mikrocodes einen Typ des zu extrahierenden Hauptbereichs bestimmen.

4. Vorrichtung nach einem der Ansprüche 1 - 3, **dadurch gekennzeichnet, dass** die Identifizierungs- und Decodierungsmittel für den Mikrocode anhand des dem zu extrahierenden Hauptbereich zugeordneten Mikrocodes eine für den zu extrahierenden Hauptbereich spezifische, anzuwendende Bearbeitungsfolge bestimmen.

5. Vorrichtung nach Anspruch 1, **dadurch gekennzeichnet, dass** die Identifizierungs- und Decodierungsmittel für den Mikrocode anhand des dem zu extrahierenden Hauptbereich zugeordneten Mikrocodes auf die Nebenbereiche anzuwendende Nachbearbeitungen bestimmen.

6. Vorrichtung nach Anspruch 4, **dadurch gekennzeichnet, dass** die Bearbeitungsfolge eine verformungsfreie Transformation der Abbildung des Hauptbereichs in der Ebene ist.

7. Vorrichtung nach einem der Ansprüche 1 - 6, **dadurch gekennzeichnet, dass** die Vorrichtung die in der Abbildung vorkommenden verschiedenen Positionszeichen unter Unterscheidung der zugeordneten Positionszeichen filtert, wenn die Abbildung mehrere Hauptbereiche umfasst.

8. Bedruckte Oberfläche (10), umfassend einen Hauptbereich (1) und mindestens ein dem Hauptbereich zugeordnetes Positionszeichen (3, 4, 5, 6; 14; 17, 18), **dadurch gekennzeichnet, dass** die Oberfläche ferner einen dem Hauptbereich zugeordneten, auf vorgegebene Art in Bezug auf den Hauptbereich positionierten Mikrocode (2) umfasst, wobei der Mikrocode die Position mindestens eines Nebenbereichs (7) in Bezug auf den zu extrahierenden Hauptbereich sowie eine auf einen durch ein Merkmal im Nebenbereich gemäß dem Mikrocode angezeigten Teil des Hauptbereichs anzuwendende Nachbearbeitung angibt.

9. Oberfläche nach Anspruch 8, **dadurch gekennzeichnet, dass** der Mikrocode Informationen über den diesem zugeordneten Hauptbereich enthält, die mindestens einem der Dimensionen, des Typs und der auf den Hauptbereich anzuwendenden Bearbeitungsfolge entsprechen.

10. Oberfläche nach Anspruch 8 oder 9, **dadurch gekennzeichnet, dass** das Positionszeichen durch eine ein eindeutiges Symbol umgebende Kontur abgegrenzt ist.

11. Oberfläche nach einem der Ansprüche 8 - 10, **dadurch gekennzeichnet, dass** es sich beim Positionszeichen um einen den diesem zugeordneten Hauptbereich umgebenden Rahmen (14) handelt.

**12.** Oberfläche nach einem der Ansprüche 8 - 10, **dadurch gekennzeichnet, dass** sie zwei sich entlang zweier gegenüberliegenden Seiten des Hauptbereichs erstreckende, unterschiedliche Positionszeichen (17, 18) umfasst.

**13.** Oberfläche nach einem der Ansprüche 8 - 10, **dadurch gekennzeichnet, dass** sie eine Vielzahl unterschiedlicher Positionszeichen (3, 4, 5, 6), wobei jedes Positionszeichen der Vielzahl Positionszeichen in jeder Ecke (31, 41, 51, 61) des Hauptbereichs angeordnet ist.

**14.** Oberfläche nach einem der Ansprüche 8 - 13, **dadurch gekennzeichnet, dass** sie mehrere Hauptbereiche umfasst, wobei jeder der Hauptbereiche mindestens einem Positionszeichen und einem Mikrocode zugeordnet ist.

**15.** Verfahren zur Bearbeitung einer Abbildung einer Oberfläche (10) nach einem der Ansprüche 8 - 14 in einer Vorrichtung nach einem der Ansprüche 1 - 7, wobei das Verfahren die Schritte umfasst:

- Erfassen (100) einer Abbildung der bedruckten Oberfläche durch die Erfassungsmittel;
- Identifizieren (110, 120) mindestens eines Positionszeichens eines zu extrahierenden Hauptbereichs in der vorher erfassten Abbildung durch die Identifizierungsmittel;
- Identifizieren und Decodieren (130, 140) des dem zu extrahierenden Bereich zugeordneten Mikrocodes, der dem vorher definierten Positionszeichen entspricht;
- Extrahieren (150, 160) des Hauptbereichs der erfassten Abbildung durch die Extraktionsmittel als Funktion mindestens eines identifizierten Positionszeichen und des identifizierten, decodierten Mikrocodes, wobei Identifizierung und Decodierung umfassen: Bestimmen mindestens eines Nebenbereichs (7) in Bezug auf den zu extrahierenden Hauptbereich, dessen Position in Bezug auf den Hauptbereich vom Mikrocode vorgegeben ist, anhand des dem zu extrahierenden Hauptbereich zugeordneten Mikrocodes, wobei die Bearbeitung umfasst: Anwenden einer Nachbearbeitung auf einen durch ein Merkmal im Nebenbereich gemäß dem Mikrocode angezeigten Teil des Hauptbereichs.

**16.** Verfahren nach Anspruch 15, **dadurch gekennzeichnet, dass** das Extrahieren des Hauptbereichs umfasst: Korrigieren (150) einer Perspektive des Hauptbereichs in der erfassten Abbildung als Funktion von Dimensionsparametern des Hauptbereichs, die vom Mikrocode angegeben werden.

**17.** Verfahren nach Anspruch 16, **dadurch gekennzeichnet, dass** das Extrahieren des Hauptberiechs umfasst: Nachbearbeiten (160) der korrigierten Abbildung des Hauptbereichs im Anschluss an eine Analyse der durch vom Mikrocode angegebene Positions- und Dimensionsparameter vorgegebenen Nebenbereiche.

## Claims

**1.** A device for automatic processing of an image of printed surfaces including at least one position marker (3, 4, 5, 6; 14; 17, 18) of a main zone to be extracted (1) of a printed surface (10) of the image, the device comprising:

- acquisition means for acquiring the image of printed surfaces;
- identification means for identifying the at least one position marker in the image of printed surfaces; and
- extraction means for extracting the main zone located in the plane of the image as a function of the at least one position marker thus identified,

**characterized in that** the device further includes means for identifying and decoding a microcode (2), associated with the zone to be extracted, in the image of printed surfaces, the microcode being placed in a predefined manner relative to the main zone to be extracted, the identification and decoding means being configured to determine, from the microcode associated with the main zone to be extracted, one or several secondary zones (7) relative to the main zone to be extracted, the position of which is predefined relative to the main zone by the microcode, the processing device being configured to determine a part of the main zone indicated by a line in the secondary zone and to apply postprocessing to said part of the main zone as a function of the microcode.

**2.** The processing device according to claim 1, **characterized in that** the identification and decoding means of the microcode determine, from the microcode associated with the main zone to be extracted, dimensions of the main zone to be extracted.

**3.** The processing device according to claim 1 or claim 2, **characterized in that** the identification and decoding means of the microcode determine, from the microcode associated with the main zone to be extracted, a type of the main zone to be extracted.

**4.** The processing device according to one of claims 1 to 3, **characterized in that** the identification and decoding means of the microcode determine, from the microcode associated with the main zone to be extracted, a processing sequence to be applied that is specific to the main zone to be extracted.

5. The processing device according to claim 1, **characterized in that** the identification and decoding means of the microcode determine, from the microcode associated with the main zone to be extracted, post-processing operations to be applied on the secondary zones.

6. The processing device according to claim 4, **characterized in that** the processing sequence is a transformation of the image of the main zone in the plane without deformation

7. The processing device according to one of claims 1 to 6, **characterized in that** the device performs a filtering of the different position markers appearing in the image if the image comprises several main zones by distinguishing the associated position markers.

8. A printed surface (10) including a main zone (1) and at least one position marker (3, 4, 5, 6; 14; 17, 18) associated with the main zone, **characterized in that** the printed circuit further includes a microcode (2) associated with the main zone and positioned in a predefined manner relative to the main zone, the microcode providing the position of one or several secondary zones (7) relative to the main zone to be extracted, and postprocessing to be applied to part of the main zone indicated by a line in the secondary zone as a function of the microcode.

9. The printed surface according to claim 8, **characterized in that** the microcode includes information on the associated main zone corresponding to at least one among the dimensions, the type and the processing sequence to be applied to the main zone.

10. The printed surface according to claim 8 or 9, **characterized in that** the position marker is delimited by a contour surrounding a distinctive symbol.

11. The printed surface according to one of claims 8 to 10, **characterized in that** the position marker is a frame (14) surrounding the associated main zone.

12. The printed surface according to one of claims 8 to 10, **characterized in that** it includes two separate position markers (17, 18) extending along two opposite sides of the main zone.

13. The printed surface according to one of claims 8 to 10, **characterized in that** it includes a set of separate position markers (3, 4, 5, 6), each position marker of the set of position markers being placed in each corner (31, 41, 51, 61) of the main zone.

14. The printed surface according to one of claims 8 to 13, **characterized in that** it includes several main zones, each of the main zones being associated with at least one position marker and one microcode.

15. A method for processing an image of a printed surface (10) according to one of claims 8 to 14 in a processing device according to one of claims 1 to 7, the processing method including the following steps:

- acquiring (100) an image of the printed structure using the acquisition means;
- identifying (110, 120) at least one position marker of a main zone to be extracted via the identification means in the image previously acquired;
- identifying and decoding (130, 140) the microcode associated with the zone to be extracted corresponding to the position marker previously identified;
- extracting (150, 160) the main zone of the acquired image via the extraction means as a function of the at least one identified position marker in the identified and decoded microcode, the identification and decoding comprising a determination, from microcode associated with the main zone to be extracted, of one or several secondary zones (7) relative to the main zone to be extracted, the position of which is predefined relative to the main zone by the microcode, the processing comprising an application of a postprocessing to a portion of the main zone indicated by a line in the secondary zone as a function of the microcode.

16. The processing method according to claim 15, **characterized in that** the step for extraction of the main zone includes a step for correction (150) of a perspective of the main zone in the acquired image as a function of dimensional parameters of the main zone given by the microcode.

17. The processing method according to claim 16, **characterized in that** the step for extraction of the main zone includes a step for postprocessing (160) of the corrected image of the main zone after analysis of the secondary zones predefined by position parameters and dimensions given by the microcode.

Fig. 1

Fig.2

*Fig.3*

Début

100

Capture d'image

Identification de 4
marqueurs de position
différents entourant une zone

110

120

Nombre
de marqueurs
?

<4

4

Détermination de la
valeur du code de zone

130

Code de zone
identifié ?

Non

140

Oui

Correction de la perspective
avec paramètres
dimensionnels de la zone

150

Post traitement spécifique de
l'image corrigée de la zone

160

Fin

**Fig.4**

**Fig.5**

EP 2 682 902 B1

_Fig.6_

_Fig.7_

*Fig.8*

**EP 2 682 902 B1**

## RÉFÉRENCES CITÉES DANS LA DESCRIPTION

### Documents brevets cités dans la description

- US 20120069383 A

- US 2010239118 A